# EUROPÄISCHE PATENTSCHRIFT

(11) **EP 1 417 069 B1**
(45) Veröffentlichungstag und Bekanntmachung des Hinweises auf die Patenterteilung: **26.07.2006**
(21) Anmeldenummer: 02794723.3
(22) Anmeldetag: 09.08.2002
(51) Int. Cl.: B23D 79/02

(54) **VORRICHTUNG ZUM INNENENTGRATEN LÄNGSNAHTGESCHWEISSTER ROHRE, SOWIE VERFAHREN ZUM EINSTELLEN EINER DERARTIGEN VORRICHTUNG**
DEVICE FOR DEBURRING THE INSIDE OF LONGITUDINAL SEAM WELDED PIPES, AND METHOD FOR ADJUSTING A DEVICE OF THIS TYPE
DISPOSITIF POUR EBAVURER L'INTERIEUR DE TUYAUX SOUDES PAR SOUDURE LONGITUDINALE ET PROCEDE POUR AJUSTER UN DISPOSITIF DE CE TYPE

(30) Priorität: 15.08.2001 DE 10140018
(43) Veröffentlichungstag der Anmeldung: 12.05.2004
(73) Patentinhaber: Salzgitter Mannesmann GmbH, 38239 Salzgitter (DE)
(72) Erfinder: WINKELS, Jörn, 59457 Werl (DE); ENGLER, Bernd, 59067 Hamm (DE)
(74) Vertreter: Meissner, Peter E.
(86) Internationale Anmeldenummer: PCT/DE2002/002988
(87) Internationale Veröffentlichungsnummer: WO 2003/015972

(56) Entgegenhaltungen:
- DE-B- 1 021 319
- GB-A- 2 085 780
- US-A- 3 834 275

## Beschreibung

Die Erfindung petrifft eine Vorrichtung zum Innenentgraten längsnahtgeschweißter Rohre gemäß dem Oberbegriff des Patentanspruches 1, sowie ein Verfahren zum Einstellen einer derartigen Vorrichtung.

Eine Vorrichtung gemäß Oberbegriff des Anspruchs 1 ist aus der DE-B-1021319 bekannt.

Aus der DE 40 20 924 C1 ist eine Vorrichtung zur Erzeugung kurzer Späne bei der Innenentgratung längsnahtgeschweißter Rohre bekannt. Bei dieser bekannten Vorrichtung ist ein Schabewerkzeug innerhalb eines längsnahtgeschweißten Rohres hinter dem Schweißpunkt angeordnet und mittels eines Trägerrahmens und einer mit einem vor dem Schweißpunkt im Bereich des noch nicht geschlossenen Rohres außerhalb des Rohres befestigten Haltearmes versehenen gabelartigen Führungsstange fixiert.

Im oberen Teil des Trägerrahmens sind zwei drehbar gelagerte Kopierrollen in Rohrbewegungsrichtung vor und hinter dem Schabepunkt angeordnet. Der Trägerrahmen ist mittels seitlicher Lagerbolzen kippbar in Ausnehmungen der seitlichen Flansche der Führungsstange gelagert, wobei die Kippachse zwischen den beiden Kopierrollen liegt.

Mit dieser Anordnung sollte nach Einstellung des Betriebszustandes und Anstellung der Kopierrollen an der Rohrinnenseite der Trägerrahmen problemlos in einer stets zur Rohroberfläche parallelen Lage fixierbar sein.

Die Schabeergebnisse waren in der Praxis aber nur teilweise befriedigend. Es zeigte sich, dass instabile Verhaltensweisen auftraten und die Messerhöhe, d. h. die Höhe um die das Messer über den Umfang der Kopierrolle vorsteht, nicht eingestellt werden kann ohne die Anlage anzuhalten.

Aufgabe der Erfindung ist es eine Vorrichtung zum Innenentgraten längsnahtgeschweißter Rohre anzugeben, die es ermöglicht, unabhängig von der Länge des Schabearmes in feinen Abstufungen das Schabemesser während des Arbeitsganges optimal einstellen zu können, sowie ein Verfahren zum Einstellen einer derartigen Vorrichtung anzugeben.

Nach der Lehre der Erfindung liegt die Kippachse des Rahmenteils ablaufseitig gesehen hinter dem Schabepunkt am Ende des Rahmenteils und am vorderen Ende des Rahmenteils ist ein Mittel zur Veränderung des Kippwinkels angeordnet. Vorzugsweise ist das Verstellmittel ein hydraulisch ansteuerbarer Stellzylinder. Damit ist es möglich, die Lage des Schabemessers um ca. 0,1 mm reproduzierbar zu verändern. Eine solche Feinabstufung ist nach dem bekannten Stand der Technik mittels der Schrägstellung des Schabearmes nicht möglich.

Nach einem weiteren Merkmal der Erfindung ist der Endbereich des Haltearmes als Gabel ausgebildet und das kippbare Rahmenteil ist zwischen den beiden parallel liegenden Gabelstücken des Haltearmes angeordnet.

Zum Kippen weist das Rahmenteil je einen sich nach rechts und links erstreckenden Zapfen auf, die auf einem auf der Oberseite der Gabelstücke des Haltearmes angeordneten Rahmenaufsatz lagerbar sind.

Das Rahmenteil kann wahlweise mit zwei oder einer Kopierrolle versehen sein. Im Fall der Anordnung von nur einer Kopierrolle ist diese vorzugsweise zwischen Schneidewerkzeug und Verstellmittel angeordnet.

Die Verstellung des Kippwinkels erfolgt in der Weise, dass nach dem Einjustieren des Haltearmes und somit des mit dem Rahmenteil verbundenen Schabewerkzeuges das Verstellmittel auf eine Mittelstellung gesetzt wird und der Verstellumfang einen Plus- und Minusbereich umfasst. Dabei bezieht sich die Verstellung auf eine Korrektur der voreingestellten Lage des Schabewerkzeuges in der Längsebene, wobei die Einjustierung auch die Lageeinstellung in der Querebene und um die eigene Längsachse in Abhängigkeit vom Wanddicken-/Durchmesserverhältnis des zu schweißenden Rohres umfasst. Anders ausgedrückt: mit Änderung des Kippwinkels des Rahmenteiles wird die Eingriffsbedingung des feststehenden Schabemessers im Hinblick auf ein möglichst optimales Schabeergebnis auf der Innenseite des Rohres verändert. Dabei wird nicht nur geringfügig die Höhe des über die Kopierrolle vorstehenden Schabemessers verändert, sondern ganz maßgeblich auch der Schneidwinkel.
Die vorgeschlagene Vorrichtung zum Innenentgraten von Rohren ist auch anwendbar bei Anordnung von einer oder mehreren Stützrollen auf der Unterseite des Haltearmes.

Weitere Merkmale, Vorteile und Einzelheiten der Erfindung ergeben sich aus der nachfolgenden Beschreibung von einem in einer Zeichnung dargestellten Ausführungsbeispiel. Es zeigen:
- **Figur 1**: in einer Längsansicht die erfindungsgemäße Ausbildung des Schneidwerkzeugbereiches,
- **Figur 2**: ein Querschnitt in Richtung A - A in Figur 1.

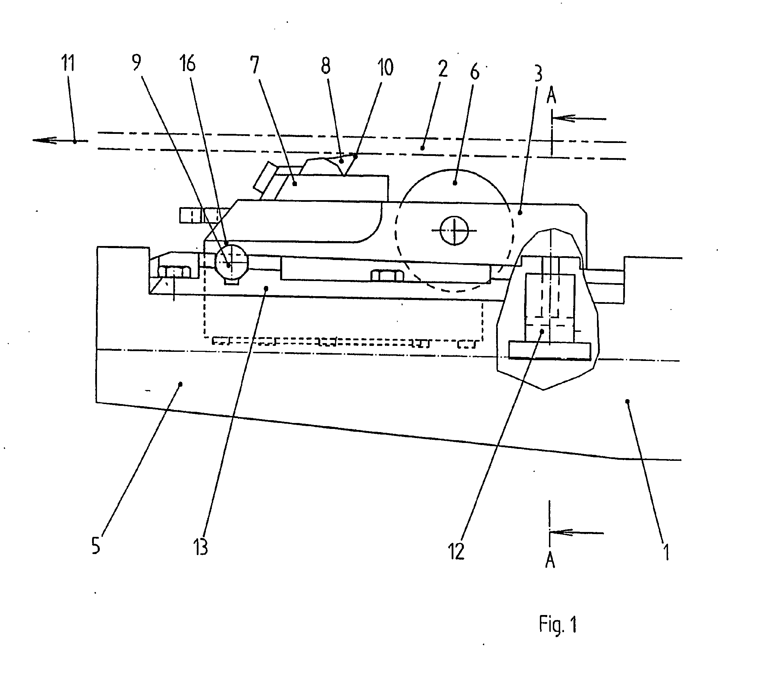

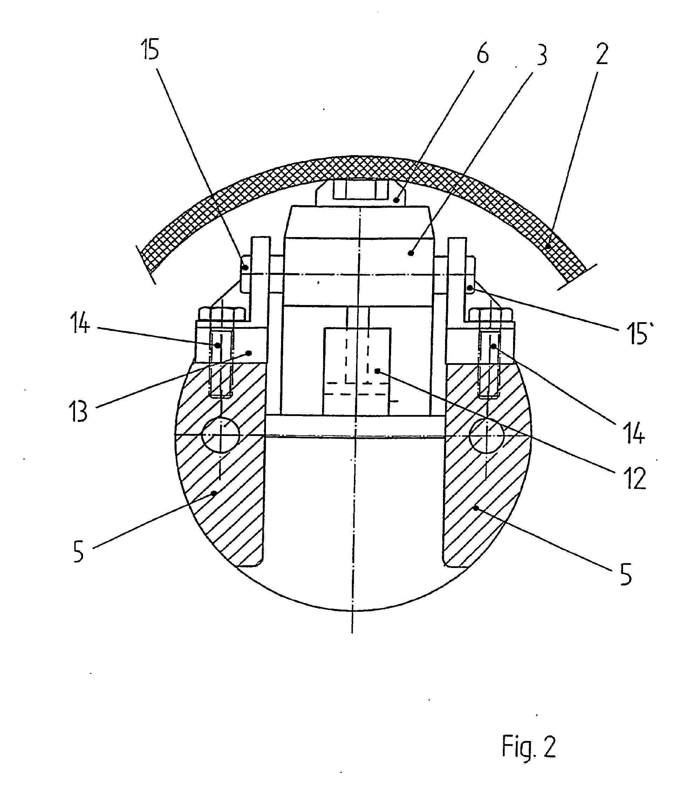

**Figur 1** zeigt in einer Längsansicht mit Aufbruch und **Figur 2** in einem Querschnitt die erfindungsgemäße Ausbildung des Schneidwerkzeugbereiches. An einem hier nur ansatzweise dargestellten Haltearm 1, der im Bereich des noch nicht geschlossenen Rohres außerhalb des Rohres befestigt ist, ist ein in Längsrichtung des Rohres 2 kippbares Rahmenteil 3 angeordnet. Dazu ist der nach dem Schweißpunkt liegende Endbereich des Haltearmes 1 als Gabel ausgebildet.

Gemäß der Darstellung in **Figur 2** weist die Gabel zwei parallel liegende Gabelstücke 5, 5' auf, zwischen denen sich das kippbare Rahmenteil 3 befindet. Das kippbare Rahmenteil 3 weist eine drehbar gelagerte Kopierrolle 6 und eine Haltevorrichtung 7 für das Schabemesser 8 auf. Die Kippachse 9 des Rahmenteiles 3 befindet sich ablaufseitig gesehen hinter dem Schabepunkt 10 am Ende des Rahmenteiles 3. Zur Verdeutlichung der Transportrichtung des Rohres 2 ist ein dick ausgezogener Pfeil 11 in die Figur eingezeichnet.

Um das Rahmenteil 3 erfindungsgemäß fein abgestuft im Kippwinkel verändern zu können, ist im vorderen Endbereich des Rahmenteiles 3 ein hydraulisch ansteuerbarer Stellzylinder 12 angeordnet. Die Einzelheiten dieses Stellzylinders 12 sind hier nicht von Interesse, da die Funktionsweise solcher Stellzylinder allgemein bekannt ist. Alternativ zum Stellzylinder 12 könnten zur Veränderung des Kippwinkels auch eine Zahnstange, eine Stellspindel oder dergleichen angeordnet sein.

In **Figur 2** ist zu erkennen, dass ein Rahmenaufsatz 13 mittels Schrauben 14 auf der Oberseite der Flansche 5, 5' befestigt ist. Das Rahmenteil 3 ist an seinen Längsseiten mit je einem sich nach rechts und nach links erstreckenden Zapfen 15, 15' versehen. Diese Zapfen 15, 15' sind in eine Nut 16 des Rahmenaufsatzes 13 einsteckbar, so dass sich die Zapfen 15, 15' innerhalb der Nut 16 drehen können.

Die in den **Figuren 1 und 2** dargestellte Ausführungsform kann variiert werden mit der Anordnung von zwei Kopierrollen, das heißt, eine Kopierrolle vor und eine nach dem Schabepunkt, sowie einem Haltearm, der zusätzlich auf der Unterseite mit einer oder mehreren Stützrollen versehen ist.

### Bezugszeichenliste

| **Nr.** | **Bezeichnung** |
|---|---|
| 1 | Haltearm |
| 2 | Rohr (geschlossen) |
| 3 | Rahmenteil |
| 5, 5' | Gabelstück-Haltearm |
| 6 | Kopierrolle |
| 7 | Haltevorrichtung |
| 8 | Schabemesser |
| 9 | Kippachse |
| 10 | Schabepunkt |
| 11 | Transportrichtung Rohr |
| 12 | hydraulischer Stellzylinder |
| 13 | Rahmenaufsatz |
| 14 | Schraube |
| 15, 15' | Zapfen |
| 16 | Nut |

## Patentansprüche

1. Vorrichtung zum Innenentgraten längsnahtgeschweißter Rohre mit einem vor dem Schweißpunkt im Bereich des noch nicht geschlossenen Rohres außerhalb des Rohres befestigten Haltearm (1), in dessen hinter dem Schweißpunkt liegenden Endbereich ein Rahmenteil (3) angeordnet ist, das mit einem Schabewerkzeug (8) und mindestens einer drehbar gelagerten Kopierrolle (6) versehen ist, **dadurch gekennzeichnet, daß** das Rahmenteil mit einer Öffnung zur Spanabfuhr versehen und in Längsrichtung des Rohres kippbar ist, wobei die Kippachse (9) des Rahmenteiles (3) ablaufseitig gesehen hinter dem Schabepunkt (10) am Ende des Rahmenteiles (3) liegt und am vorderen Ende des Rahmenteiles (3) ein Mittel zur Verstellung des Kippwinkels angeordnet ist.

2. Vorrichtung nach Anspruch 1,
**dadurch gekennzeichnet,**
**dass** der nach dem Schweißpunkt liegende Endbereich des Haltearmes (1) als Gabel ausgebildet ist und das kippbare Rahmenteil (3) zwischen den beiden parallel liegenden Gabelstücken (5, 5') des Haltearmes (1) angeordnet ist und in der Kippachse (9) je einen sich nach rechts und nach links erstreckenden Zapfen (15, 15') aufweist, die auf der Oberseite der Gabelstücke (5, 5') lagerbar sind.

3. Vorrichtung nach Anspruch 1 oder 2,
**dadurch gekennzeichnet,**
**dass** das Rahmenteil mit zwei Kopierrollen versehen ist, wovon eine vor und eine nach dem Schabepunkt (10) angeordnet ist.

4. Vorrichtung nach Anspruch 1 oder 2,
**dadurch gekennzeichnet,**
**dass** das Rahmenteil (3) mit einer Kopierrolle (6) versehen ist.

5. Vorrichtung nach Anspruch 4,
**dadurch gekennzeichnet,**
**dass** die Kopierrolle (6) zwischen Schabewerkzeug (8) und Verstellmittel angeordnet ist.

6. Vorrichtung nach einem der Ansprüche 1 bis 5,
**dadurch gekennzeichnet,**
**dass** das Verstellmittel ein hydraulisch ansteuerbarer Stellzylinder (12) ist.

7. Vorrichtung nach einem der vorstehenden Ansprüche,
**dadurch gekennzeichnet,**
**dass** die Feinabstufung des Verstellumfanges ca. 0,1 mm bezogen auf das Schabewerkzeug beträgt.

8. Verfahren zum Einstellen einer Vorrichtung zum Innenentgraten
längsnahtgeschweißter Rohre mit einer Vorrichtung gemäß den Ansprüchen 1-7,
wobei
der Haltearm (1) und somit das mit dem Rahmenteil (3) verbundene Schabewerkzeug zunächst einjustiert und das Verstellmittel dann auf eine Mittelstellung gesetzt wird, bei der der Verstellumfang einen Plus- und Minusbereich umfasst.

9. Verfahren nach den Anspruch 8,
**dadurch gekennzeichnet,**
**dass** die Einjustierung des Haltearmes (1) und somit des mit dem Rahmenteil (3) verbundenen Schabewerkzeuges eine Lageeinstellung in der Längsebene, in der Querebene und um die eigene Längsachse in Abhängigkeit vom Wanddicken-/Durchmesserverhältnis des zu schweißenden Rohres (2) umfasst.

10. Verfahren nach den Ansprüchen 8 - 9
**dadurch gekennzeichnet,**
**dass** mit der Feineinstellung mittels des Verstellmittels die voreingestellte Lage des Schabewerkzeuges in der Längsebene korrigiert wird.

## Claims

1. Device for deburring the inside of longitudinally welded pipes, with a retaining arm (1) which is secured before the welding point in the region of the as yet unclosed pipe outside of the pipe and in whose end region lying after the welding point a frame part (3) is disposed, which part is provided with a scraping tool (8) and at least one rotatably mounted roller follower (6),
**characterised in**
**that** the frame part is provided with an opening for removing the swarf and can be tilted in the longitudinal direction of the pipe, wherein, viewed on the discharge side, the tilting axis (9) of the frame part (3) lies after the scraping point (10) at the end of the frame part (3), and a means for adjusting the angle of tilt is disposed at the front end of the frame part (3).

2. Device according to Claim 1,
**characterised in**
**that** the end region of the retaining arm (1) which lies after the welding point is formed as a fork, and the tiltable frame part (3) is disposed between the two parallel fork pieces (5, 5') of the retaining arm (1) and comprises a respective pin (15, 15'), extending to the right and to the left, at the tilting axis (9), which pins can be mounted on the top side of the fork pieces (5, 5').

3. Device according to Claim 1 or 2,
**characterised in**
**that** the frame part is provided with two roller followers, of which one is disposed before and one after the scraping point (10).

4. Device according to Claim 1 or 2,
**characterised in**
**that** the frame part (3) is provided with one roller follower (6).

5. Device according to Claim 4,
**characterised in**
**that** the roller follower (6) is disposed between the scraping tool (8) and the adjustment means.

6. Device according to any one of Claims 1 to 5,
**characterised in**
**that** the adjustment means is a hydraulically controllable operating cylinder (12).

7. Device according to any one of the preceding Claims,
**characterised in**
**that** the fine graduation of the adjustment range is approximately 0.1 mm, related to the scraping tool.

8. Method for setting a device for deburring the inside of longitudinally welded pipes with a device according to Claims 1 - 7, wherein
the retaining arm (1) and therefore the scraping tool connected to the frame part (3) are firstly adjusted, and the adjustment means is then set to a central position, the adjustment range comprising a plus and a minus region.

9. Method according to Claim 8,
**characterised in**
**that** the adjustment of the retaining arm (1) and therefore of the scraping tool connected to the frame part (3) comprises position setting in the longitudinal plane, in the transverse plane and about the specific longitudinal axis in accordance with the wall thickness/diameter ratio of the pipe (2) which is to be welded.

10. Method according to Claims 8 - 9,
**characterised in**
**that** the preset position of the scraping tool in the longitudinal plane is corrected with the fine setting by means of the adjustment means.

## Revendications

1. Dispositif d'ébavurage intérieur pour tubes à soudure longitudinale comportant un bras de retenue (1) fixé à l'extérieur du tube, devant le point de soudure, dans la zone du tube non encore fermé, ce bras de retenue (1) ayant dans sa zone d'extrémité située derrière le point de soudure une partie cadre (3), laquelle est pourvue d'un outil d'arasage (8) et d'au moins un galet de gabarit (6) monté de manière rotative,
**caractérisé en ce que** la partie cadre est pourvue d'une ouverture pour l'évacuation des copeaux et est basculable dans la direction longitudinale du tube, l'axe de basculement (9) de la partie cadre (3) étant situé, vu du côté de l'écoulement, derrière le point d'arasage (10) à l'extrémité de la partie cadre (3) et un dispositif de réglage de l'angle de basculement étant agencé à l'extrémité avant de la partie cadre (3).

2. Dispositif selon la revendication 1,
**caractérisé en ce que** la zone d'extrémité du bras de retenue (1) située après le point de soudure est réalisée sous forme de fourche et la partie cadre (3) basculable est agencée entre les deux éléments de fourche (5, 5') parallèles et présente dans l'axe de basculement (9) de chaque côté un tourillon (15, 15') s'étendant vers la droite et vers la gauche, lesquels tourillons peuvent être montés sur la face supérieure des éléments de fourche (5, 5').

3. Dispositif selon la revendication 1 ou 2,
**caractérisé en ce que** la partie cadre est pourvue de deux galets de gabarit, dont l'un est agencé avant le point d'arasage (10) et l'autre après.

4. Dispositif selon la revendication 1 ou 2,
**caractérisé en ce que** la partie cadre (3) est pourvue d'un galet de gabarit (6).

5. Dispositif selon la revendication 4,
**caractérisé en ce que** le galet de gabarit (6) est agencé entre l'outil d'arasage (8) et le dispositif de réglage.

6. Dispositif selon l'une des revendications 1 à 5,
**caractérisé en ce que** le dispositif de réglage est un cylindre de réglage (12) pouvant être commandé hydrauliquement.

7. Dispositif selon l'une des revendications précédentes,
**caractérisé en ce que** le degré de précision de l'amplitude de réglage est égal à environ 0,1 mm rapporté à l'outil d'arasage.

8. Procédé de réglage d'un dispositif d'ébavurage intérieur pour tubes à soudure longitudinale comportant un dispositif suivant les revendications 1 à 7, le bras de retenue (1) et ainsi l'outil d'arasage relié à la partie cadre (3) étant ajusté dans un premier temps et le dispositif de réglage étant réglé ensuite sur une position centrale dans laquelle l'amplitude de réglage comporte une zone plus et une zone moins.

9. Procédé selon la revendication 8,
**caractérisé en ce que** l'ajustage du bras de retenue (1) et ainsi de l'outil d'arasage relié à la partie cadre (3) comporte un réglage de position dans le plan longitudinal, dans le plan transversal et autour de l'axe longitudinal propre en fonction du rapport épaisseur de paroi/diamètre du tube (2) à souder.

10. Procédé selon les revendications 8 à 9,
**caractérisé en ce que**, avec le réglage fin, la position préréglée de l'outil d'arasage est corrigée dans le plan longitudinal au moyen du dispositif de réglage.
